# EUROPEAN PATENT SPECIFICATION

(11) **EP 2 608 706 B1**
(45) Date of publication and mention of the grant of the patent: **13.08.2014**
(21) Application number: 11768091.8
(22) Date of filing: 16.08.2011
(51) Int. Cl.: A47J 37/07, A47J 37/04

(54) **EQUIPMENT FOR COOKING BARBECUE FOOD**
GERÄT ZUM GAREN VON GRILLGUT
ÉQUIPEMENT POUR LA CUISSON D'ALIMENTS POUR BARBECUE

(30) Priority: 26.08.2010 IT TO20100713
(43) Date of publication of application: 03.07.2013
(73) Proprietor: Porello, Carlo, 12060 Roddi (Cuneo) (IT)
(72) Inventor: PORELLO, Isabella, 12060 Roddi (Cuneo) (IT); PORELLO, Angelo, 12060 Roddi (Cuneo) (IT); PORELLO, Silvano, 12060 Roddi (Cuneo) (IT)
(74) Representative: Aprà, Mario
(86) International application number: PCT/IB2011/001888
(87) International publication number: WO 2012/025807

(56) References cited:
- EP-A1- 1 994 865
- DE-U1- 20 303 004
- US-A- 3 087 416
- US-A1- 2008 268 121
- US-A1- 2009 056 695

## Description

The present invention relates to equipment for cooking barbecue food.

Equipment for cooking barbecue food is known, in particular there are known stoves for barbecues or the like. US 2008/0268121 discloses a barbecue cooking apparatus.

The technical parameters that determine optimum barbecue cooking are numerous and difficult to control. In particular, the temperature and relative humidity to which food is exposed during cooking are extremely important. However, the times for which the different parts of food to be cooked are exposed to the hot chars are also of noteworthy importance for optimum cooking. Control of these parameters depends not only on the ability and experience of the operator in charge of the cooking stove, but also on his or her attention and commitment, which must be very high to obtain optimum results. However, this is not always possible, in particular in a professional environment, i. e. in the field of public catering, where the person in charge of cooking food simultaneously prepares several types of totally different food.

Moreover, cooking food on a barbecue often causes soiling of the surface of the stove and, in the absence of protections, also of the area surrounding the same stove. This fact causes significant inconveniences when performing this cooking operation in indoor environments, such as those for public catering.

On the other hand, the barbecue cooking operation is often performed using charcoal as fuel. Nonetheless, to improve the organoleptic properties of barbecued food, it is preferable for the char to be produced by combustion of dry wood to be used in the cooking stove, also in the case of public catering. However, this is not easily produced in known stoves for barbecue cooking.

Moreover, a need also exists to cook several types of food on the barbecue simultaneously and with the same equipment, in particular in the field of public catering.

The present invention, starting from the notion of the drawbacks, intends to provide a remedy.

An object of the present invention is to provide equipment for barbecue cooking of food which allows simple and effective barbecue cooking of food, in particular with reference to the different cooking parameters specified above.

Another object of the invention is to provide equipment of the type indicated, which allows the prevention of undesirable soiling of the surrounding areas and is easy to clean and to perform maintenance and hygiene checks thereon.

Yet another object of the invention is to provide equipment as indicated, which allows chars to be prepared through combustion of wood or the like and use thereof in the same equipment as soon as it is prepared.

A further object of the invention is to provide equipment as indicated, which can operate both with a single stove and with a plurality of active stoves, so as also to cook several types of totally different food simultaneously.

One more object of the invention is to provide equipment as specified above, which has a relatively limited cost.

In view of these objects, the present invention provides equipment for cooking barbecue food, the essential characteristics of which form the subject matter of claim 1. Further advantageous characteristics are described in the dependent claims.

The aforesaid characteristics are intended as fully included herein.

The present invention will be more apparent from the detailed description below with reference to the accompanying drawing, provided purely by way of non-limiting example, wherein:
- Fig. 1 is an elevated front view of equipment for cooking barbecue food, according to a first embodiment, in which the equipment comprises four stoves;
- Fig. 2 is an elevated side view in the direction of the arrow II of Fig. 1;
- Figs. 3, 4 and 5 are cross sectional views, respectively according to the lines III-III, IV-IV and V-V of Fig. 1, in which Fig. 3 is partly interrupted for clarity of illustration;
- Fig. 6 is a detailed sectional view and in a larger scale according to the line VI-VI of Fig. 4;
- Fig. 7 is a longitudinal sectional and top plan view according to the line VII-VII of Fig. 1;
- Fig. 8 is a detailed view and in a larger scale of the detail VIII of Fig. 7;
- Fig. 9 is a detailed view and in a larger scale of the detail IX of Fig. 3;
- Fig. 10 is a detailed view and in a larger scale of the detail X of Fig. 2, but illustrated in view;
- Figs. 11A and 11B are detailed views and in a larger scale of the detail XI of Fig. 3, respectively in different operating arrangements;
- Fig. 12 is a similar view to that of Fig. 1, but in which the equipment is represented in the condition of use for barbecue cooking a large piece of food simultaneously on two adjacent stoves;
- Fig. 13 is an elevated front view of equipment for cooking barbecue food, according to a second embodiment in which the equipment comprises two stoves;
- Fig. 14 is an elevated front view of equipment for cooking barbecue food, according to a third embodiment in which the equipment comprises a single stove.

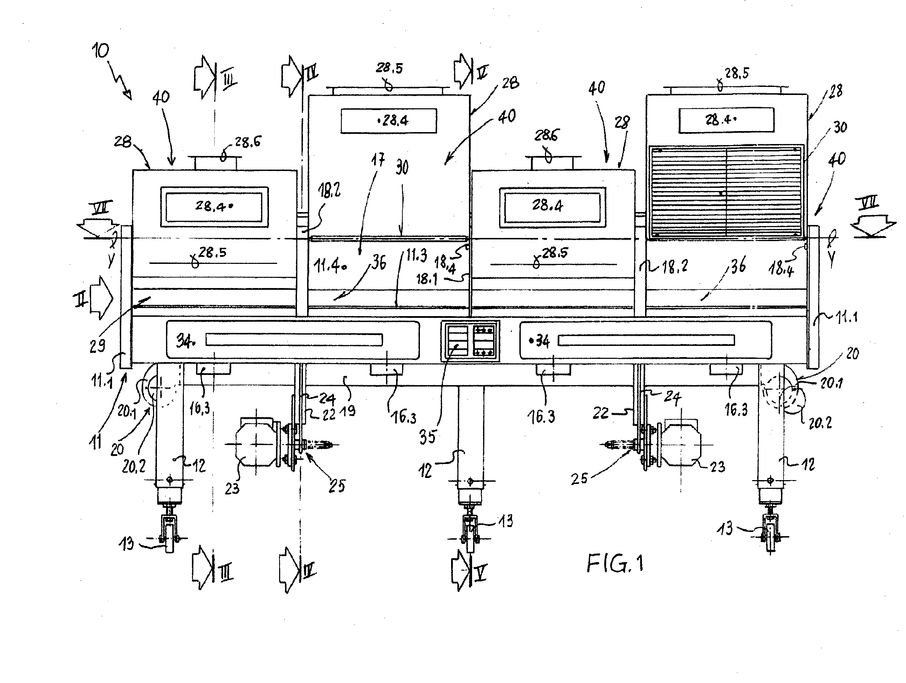

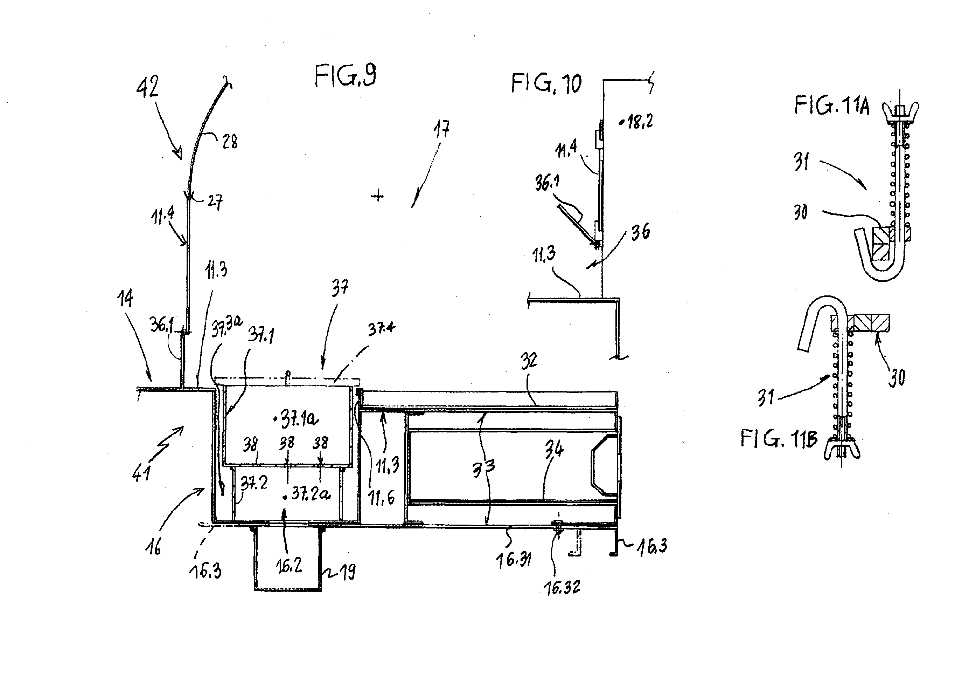

### First embodiment: Figs. 1 to 11A, 11B

With reference to the aforesaid figures, the equipment for cooking barbecue food, according to said first embodiment, is indicate as a whole with 10 (Fig. 1).

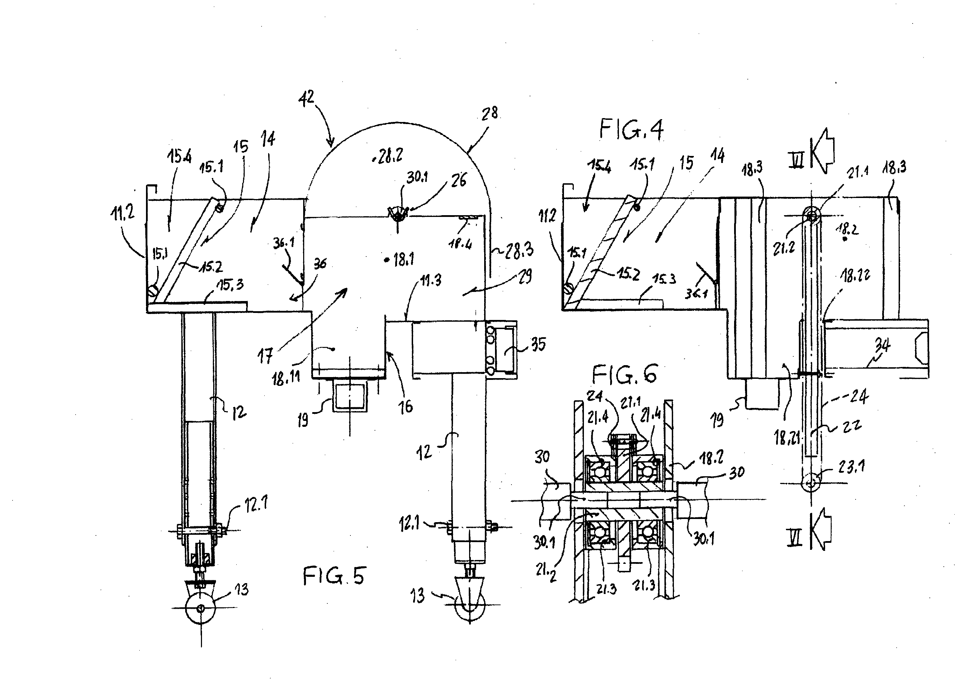

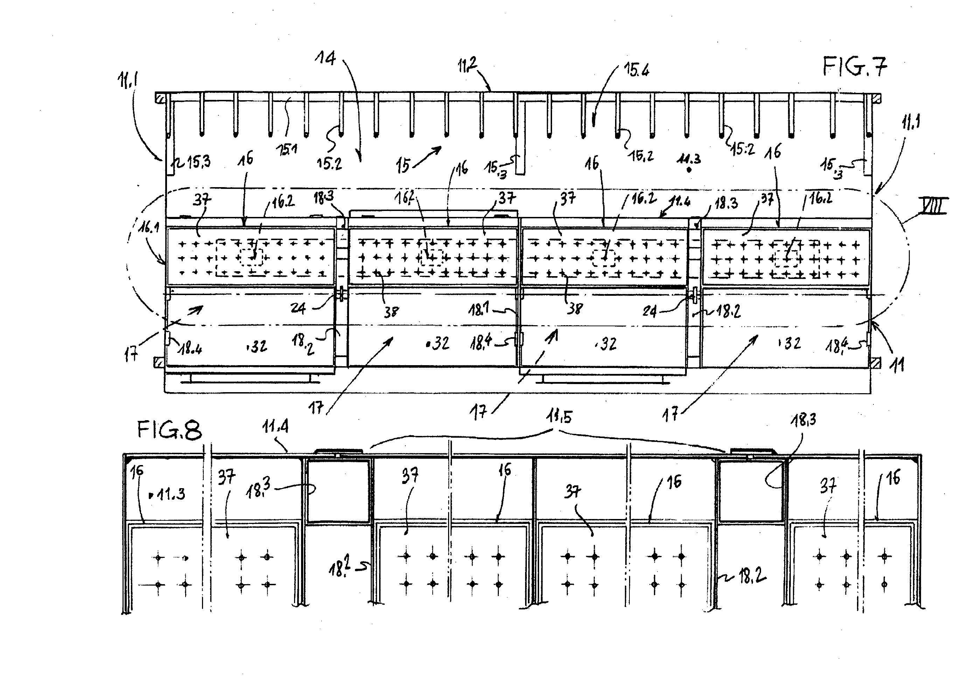

Said equipment 10 comprises a wide rectangular bench 11 (Figs. 1, 7), made of folded steel sheet and supported by three legs 12, two side front legs and one central back leg. Said legs 12 are made of box section steel sheet and are telescopically adjustable in height (fig. 5), by a bolt 12.1 with horizontal axis. Each leg 12 is in turn supported by an idle wheel with horizontal axis 13 and pivoting about a vertical axis. The distance of the wheel 13 from the related leg 12 is adjustable by screws, threaded nut fixed to the leg 12 and counter nut. Said bench 11 is laterally delimited, along the two crosswise sides and the longitudinal back side, by respective fixed vertical side, crosswise 11.1 and back longitudinal 11.2 walls (Figs. 1, 2, 7), made of steel sheet. In particular, the crosswise walls 11. 1 have a box section, while the longitudinal wall 11.2 is made of a single metal sheet. The reference 11.3 indicates the flat surface of the bench 11, which projects frontally in part beyond said crosswise side walls 11.1 and relative to which said side walls 11.1 and 11.2 rise.

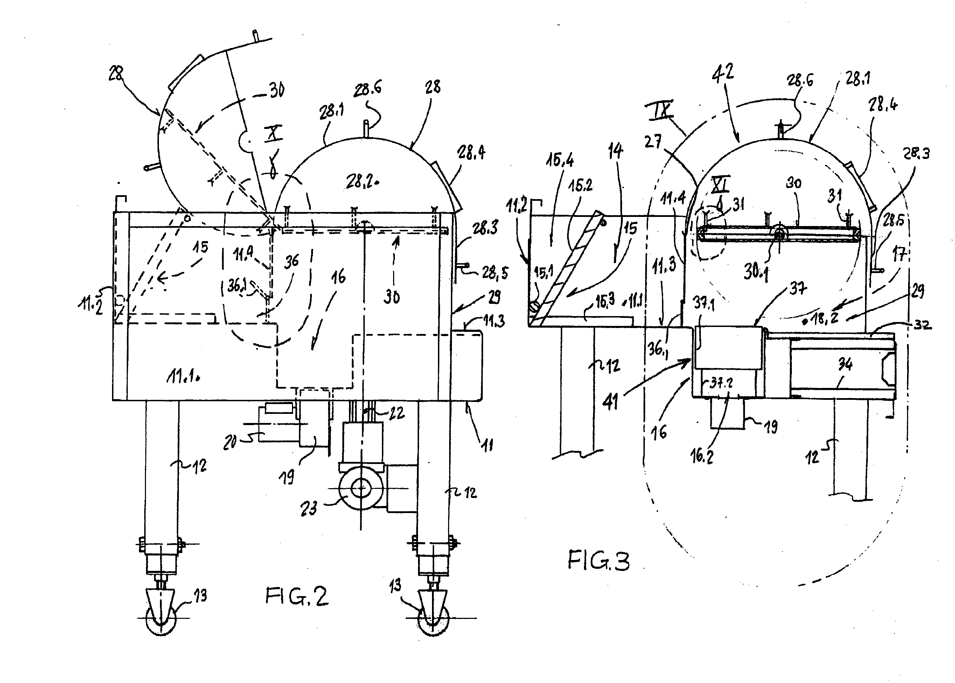

On said flat surface 11.3 there is mounted a vertical longitudinal partition wall 11.4, made of steel sheet, fixed relative to said crosswise walls 11.1 and parallel relative to said longitudinal back wall 11.2. With said side walls 11.1, 11.2, said partition wall 11.4 delimits in the bench 11 a back chamber 14 (Figs. 3,7), open at the top and extending for the entire length and for just under half the width of the same bench.

In said back chamber 14, a removable rack 15 is resting on the flat surface 11.3 and against the longitudinal back wall 11.2. Said rack 15 is formed by longitudinale metal rods 15.1 which join together, for example by welding, a plurality of inclined metal prongs 15.2, with trend diverging upwards relative to said back wall 11.2. The aforesaid crib structure of the rack 15 is fixed, for example welded, relative to crosswise feet 15.3, made of metal section bars, which rest stably on the flat surface 11.3. A crib 15.4, open at the top, is thus formed between said back side wall 11.2 and the prongs 15.2.

In the part of the bench 11 immediately in front of said longitudinal partition wall 11.4, in particular in the flat surface 11. 3, there are provided four pits 16 (Fig. 7), substantially identical, with rectangular shaped parallelepiped cavity, longitudinally aligned with one another so that the longer base sides are parallel with said partition wall 11.4.

Said pits 16 are formed starting from a single longitudinal channel 16.1 (Fig. 7) with flat bottomed U-shaped cross section, which extends along the whole of said flat surface 11.3 and by three crosswise partitions, which divide said part of the bench 11, in front of the longitudinal partition wall 11.4, into four front chambers 17, open at the top, of the same width. In particular, said front chambers 17 (Figs. 1, 3, 4, 5, 7) are delimited by:
- a removable median crosswise partition 18.1 (arranged on the median crosswise plane of the bench 11.3), formed by a steel sheet, removably fixed relative to the same bench, and
- two fixed intermediate crosswise partitions 18.2, each arranged substantially at equal distance from said median crosswise partition 18.1 and from a respective crosswise side wall 11.1; said intermediate partitions have a box section made of steel sheet and are closed at the top by a corresponding cover made of metal plate (not shown).

Said three crosswise partitions 18.1, 18.2 each have a respective vertical appendage 18.11, 18.21 (Figs. 4, 5), inserted with fit in said longitudinal channel 16.1, so as to divide the same channel into said four contiguous pits 16. The structure is made substantially air-tight. Moreover, at said box section crosswise partitions 18.2, said longitudinal channel 16.1 has corresponding openings 18.22 (Fig. 4). Moreover, said box section partitions 18.2 are reinforced by square section tubular metal uprights 18.3.

In the flat bottom of each pit 16 there is provided, centrally, a rectangular opening 16.2 (Figs. 3, 7, 9).

Said openings 16. 2 communicate directly with an underlying longitudinal forced air conduit 19, substantially having a square section and formed by a steel sheet bent in a "U" and fixed in a sealed manner under the flat surface 11.3, along said channel 16.1 of the same flat surface. At each of the two longitudinal ends of said air conduit 19 there is connected a respective electric fan 20 (Figs. 1, 2), enclosed in an open box 20.1 mounted in a sealed manner relative to said conduit 19. A cover 20.2 is connected in an oscillating manner relative to each open box 20.1, so as to allow both closing and opening (total or partial) of the same box, to correspondingly adjust the flow of air entering said conduit 19.

Said opening 16.2 is selectively closed (totally or partially) by a linear gate 16.3 made of metal plate (Figs. 1, 9), slidingly arranged in a horizontal plane below the flat bottom of the respective pit 16, interposed between said bottom and said forced air conduit 19 and extending up to the front part of the bench 11, one end thereof being bent in the shape of an upside down L, so as to form a handle. In this manner a simple gate valve is produced shut off the flow of air passing through the opening 16.2 of each pit 16. Said gate 16.3 has a slotted hole 16.31, extending in the crosswise direction of the flat surface 11.3 and in which is slidingly engaged a corresponding rivet or the like 16.32, fixed to said flat surface and acting as limit stop of the same gate.

It can be noted that the longitudinal partition wall 11. 4 comprises a removable intermediate part 11. 5 (Fig. 8), which corresponds to the two intermediate chambers 17.

Inside and in proximity of the top of each box section crosswise partition 18.2, there is mounted a top pinion 21. 1 (Figs. 4, 6), fitted relative to a longitudinal horizontal hollow shaft 21.2, supported rotating by a pair of opposed ball bearings 21.3, coaxial and supported by respective metal covers 21.4. A sturdy vertical support bar 22, formed by a metal section bar, is fixed inside said crosswise partition 18.2 underneath said top pinion, and extends, starting from said covers 21.4, downwards up to underneath the flat surface 11.3. At the bottom end thereof, said support bar 22 supports rigidly and in a cantilever fashion a respective electric gear motor unit 23 (Figs. 1,2), the output shaft of which is arranged with horizontal axis parallel to that of said shaft 21.2 and carries a corresponding pinion 23.1, identical to said pinion 21.1. Between said pinions 21.1 and 23.1 there is meshed a corresponding Galle chain 24. It must be noted that said pinion 23.1 is connected relative to the output shaft of the gear motor unit 23 with the intermediary of a single-plate leather friction clutch 25 and with preload spring, functioning as limiter of the maximum transmittable torque.

The shaft 21.2 of each top pinion or driven pinion 21.1 has a prismatic through cavity, accessible from each front chamber 17 by an appropriate coaxial through hole in the adjacent intermediate crosswise partition 18.2. Correspondingly, the median crosswise partition 18.1 and the crosswise side walls 11. 1 have respective V-shaped fixed supports 26 (Fig. 5), which project from their face facing towards said prismatic cavity and the vertices of which are substantially aligned in longitudinal direction relative to the axis of said shafts 21. 2. In this manner, the axes of said shafts 21. 2 and said vertices of the V-shaped supports 26 lie on a same ideal axis line Y-Y, extending in longitudinal direction and coincident with the section line VII-VII of Fig. 1. Substantially at the level of the horizontal plane containing said longitudinal axis line Y-Y, the opposite faces of the crosswise partitions 18.1, 18.2 and the inner faces of the crosswise side walls 11.1 have respective fixed supporting projections 18.4. It must be noted that the free top edge of said longitudinal partition wall 11.4 is also substantially at the level of the aforesaid horizontal plane (Figs. 1, 5).

Said longitudinal partition wall 11.4 supports, at each front chamber 17, a pair of fixed forks 27 (Figs. 3, 9), projecting and open upwards from the free top edge thereof and relative to which a corresponding cover 28, made of steel sheet, is supported. Said cover 28 is substantially semi-cylindrical and has a barrel vault 28. 1 (Fig. 2) and two semi-circular disk-shaped sides 28.2, which, in an oscillating position of the cover 28 called "working position", rest on at least one of said fixed supporting projections 18.4 (Fig. 5). In this working position, the axis of each semi-cylindrical cover 28 coincides substantially with said longitudinal axis line Y-Y and the same cover is arranged to close the top part of the respective front chamber 17 (Figs. 3, 5). Moreover, said cover 28 also has an integral tab 28. 3 (Figs. 2, 3, 5), which extends the front end of the barrel vault 28.1 and, in said working position of the same cover, extends towards the flat surface 11.3, with distance relative thereto, so as to form a front ventilation slit 29 between cover and flat surface. A respective rectangular window 28.4, closed with thermal glass and in proximity of said tab 28.3, is provided in the barrel vault 28.1 of each cover 28. Said tab 28.3 is provided with a first fixed outer handle 28.5 of the cover 28, while a second fixed outer handle 28.6 is provided in the top median part of the barrel vault 28.1 of the same cover.

In each front chamber 17, a barbecue cooking utensil 30 (Figs. 1, 3) is supported rotating about said axis line Y-Y and in a removable manner, by demountable engagement of two opposite longitudinal shanks thereof 30.1 (Figs. 3, 5), arranged respectively in a shape-mating manner inside the cavity of a hollow shaft 21.2 and resting inside a V-shaped support 26. In the case illustrated here, said cooking utensil 30 consists of a rectangular grill with two substantially parallel gridiron surfaces, which can be mutually opened or closed, by demountable clamping means 31 with hook and wing screw assisted by a coil spring with coaxial compression. Figs. 11A and 11B respectively illustrate the closed and open position of the two gridiron surfaces of said grill 30, controlled by said clamping means 31.

In each front chamber 17, the front part of the flat surface 11. 3 lying in front of the pit 16 (i.e. distal from the longitudinal partition wall 11.4) is lowered relative to the back part of the same flat surface, lying behind said pit (Fig. 9). Moreover, between the pit 16 and said lowered part of the flat surface 11.3 there is provided a vertical side panel 11.6, the top edge of which is located substantially at the level of said back part of the flat surface 11.3 and which delimits the front of the same pit.

Moreover, in each front chamber 17, a rectangular tray 32 (Figs. 3, 7, 9), made of steel and of a height corresponding to that of said side panel 11. 6, placed over said front part of the flat surface 11.3 and is connected in a removable manner to the same side panel by a folded back edge thereof.

In the front part of the bench 11 below the flat surface 11.3 and arranged in front of the pits 16 there is provided a box structure 33 (Fig. 9) made of steel sheet, in which there are provided two metal drawers 34 (Figs. 1, 9), mounted sliding on respective rectilinear guides, and an intermediate electrical box 35, appropriately electrically insulated. Relative to said electrical box 35 (Figs. 1, 5), there are electrically branched, by convenient insulated electrical conductors (not shown), the electrical control means (also not shown) of the electric fans 20, of the electric geared motor units 23 and of any lighting means (also not shown) provided in the equipment 10.

Moreover, in each front chamber 17, the longitudinal partition wall 11.4 has an opening 36 extending for the entire width of the same chamber and of limited height starting from the flat surface 11. 3 (Figs. 1, 2, 5, 10). Said opening 36 can be selectively closed and opened by a corresponding port 36.1, supported relative to said partition wall 11.4 in a manner oscillating about a substantially longitudinal axis.

Each pit 16 comprises a char container 37 (Figs. 3, 7, 9) in the form of a removable parallelepiped box, for example made of welded sheet metal. Said box container 37 comprises a metal box 37.1, open at the top and having length and width slightly less than the corresponding dimensions of the base of said pit 16. Said metal box 37. 1 is supported by a hollow base 37. 2, formed by four vertical metal strips, each corresponding to a respective side wall of said box 37.1, joined in a sealed manner to one another and fixed in a sealed manner relative to the base of said box 37.1, for example by welding. Said hollow pedestal 37. 2 rests on the flat bottom of said pit 16, so as to surround the corresponding opening 16.2 of the same bottom and to support said box 37. 1 with the top edge thereof substantially at the same level as said back part of the flat surface 11.3, adjacent to said opening 36 in the longitudinal partition wall 11.4.

By this arrangement, three distinct spaces are delimited in each pit 16, namely:
a space 37.1a (Fig. 9) inside the box 37.1, open at the top, a space 37.2a inside the pedestal 37.2 and corresponding to the opening 16.2 of the bottom of the pit, and a narrow space 37.3a delimited between the bottom and the side walls of the pit 16, on the one side, and the side walls of the pedestal 37.2 and of the box 37.1, on the other side. It must be noted that the bottom of the box 37.1 is perforated (Figs. 7, 9), as it has an arrangement of calibrated through holes 38 ordered according to rows and columns and distributed over a substantial part of the same bottom. Said calibrated holes 38 place the inner space 37.2a of the pedestal 37.2 in air communication with the inside 37.1a of said box 37.1.

A char extinguishing cover 37.4 is provided to be placed over each box 37, so as to retard or extinguish combustion of the char, when required. The cover 37. 4 can also contain water, which increases the weight and consequently the stability in place.

As stated above, the equipment 10 comprises four stoves, each indicated with 40 (Fig. 1). Taking account of the foregoing description, each stove 40 comprises (Figs. 1, 3, 9):
- a combustion chamber 41, formed in a respective front part of the flat surface 11. 3 and including:
   - a pit 16 having a flat bottom, in which an opening 16.2 is formed for the feed of forced air coming from the air conduit 19 and forced by electric fan means 20, a container for chars 37, comprising a box for chars 37.1 resting on the bottom of said pit 16 by a hollow pedestal 37.2, which surrounds said opening for the feed of forced air 16.2; between said pit 16 and said container for chars 37 the narrow space 37.3a is provided, while the box for chars 37.1 is in air communication with the hollow pedestal 37.2 by the calibrated through holes 38 distributed uniformly in the corresponding part of the bottom of the same box;

- a cooking chamber 42 above said combustion chamber 41 and including:
   - three vertical walls/partitions extending upward and which delimit the same cooking chamber 42 relative to a respective front part of the flat surface 11.3 and around the related pit 16, namely: two crosswise side walls / partitions, 11.1, 18.1 and/or 18.2, and a respective part of longitudinal partition wall 11.4,
   - a tray 32 in front of the related pit 16, for containing water and collecting liquids released by the food during cooking,
   - means for supporting and controlling in rotation a cooking utensil 30 in the form of a spit, grill or the like, arranged according to a longitudinal horizontal axis line Y-Y, in proximity of the top part of said walls / partitions 11.1, 18.1, 18.2 and including a V-shaped fixed support 26 in a crosswise side wall / partition 11.1 or 18.1 and a hollow driven shaft 21.2 in the opposite crosswise side partition 18.2; said cooking utensil 30 being provided with opposed end shanks 30.1, one of which is engaged demountably in said hollow driven shaft 21.2 and the other is resting on said V-shaped fixed support 26,
   - means for driving in rotation said driven shaft 21. 2 including a drive with pinions 21.1, 23.1 and chain 24, included in one of said crosswise partitions 18.2 and an electric gear motor unit 23 with torque limiter 25,
   - a cover 28 removable and oscillating relative to an axis parallel to said axis Y-Y, which is arranged resting on and above relative to walls / partitions 11.1, 18.1 and/or 18.2, 11.4 and comprises a part shaped as a barrel vault 28.1 coaxial relative to said axis Y-Y and two semi-circular disk-shaped sides 28.2, which close the top part of said cooking chamber 42, allowing free rotation of said cooking utensil 30, carrying the food to be cooked on the barbecue, about said axis Y-Y;
- a respective area of the char preparation chamber 14, open at the top, formed in the back part of the flat surface 11.3, communicating with said combustion chamber 41 through an opening 36 provided in the longitudinal partition wall 11. 4, extending substantially for the entire width of the cooking chamber 42 and of limited height starting from the flat surface 11.3; said char preparation chamber including:
   - a removable rack 15 shaped as a crib 15.4 for loading wood to be burnt, resting of said flat surface 11.3.

### Operation

In said preparation chamber 14, in particular in the crib 15.4 of the rack 15 a suitable amount of wood to be burnt is arranged and ignited. The burning wood gradually deposits burning chars on the flat surface 11.3 in said chamber 14, which are appropriately driven, through the openings 36 (the corresponding port 36.1 of which is oscillated to open), until they fill the boxes for chars 37.1 of the containers 37 arranged in the respective pits 16. After this, the ports 36.1 are oscillated to close.

The gridiron surfaces of four cooking utensils 30 are opened. The food to be cooked is arranged on one of said surfaces of each cooking utensil 30 and then the two gridiron surfaces of each cooking utensil 30 are closed and mutually clamped by the respective demountable clamping means 31. The food to be cooked is thus sandwiched in said utensils 30, which are each arranged in a respective cooking chamber 42 (the cover 28 of which is removed or oscillated to open). The opposed end shanks 30.1 of each utensil 30 are respectively one engaged demountably in a corresponding hollow driven shaft 21.2, and the other placed on a respective V-shaped fixed support 26.

The trays 32 are arranged in front of the respective pits 16 (making the respective folded edges engage on the corresponding side panels 11.6). Said trays 32 are then at least partially filled with water.

The cover 28 of each cooking chamber 42 is arranged resting on said longitudinal partition wall 11. 4 and on at least one fixed projection 18.4 of a respective crosswise wall 11.1 or crosswise partition 18.1, or is tilted by oscillation about an axis parallel to the axis Y-Y and rests on said walls / partitions, so as to close the same cooking chamber 42. Naturally, the wide front slit 29 between cover 28 and flat surface 11.3 remains open.

The two electric gear motor units 23 are electrically connected, thereby causing all said cooking utensils 30 to rotate simultaneously about said longitudinal axis Y-Y.

The two electric fans 20 are also electrically connected, adjusting opening or closing of the respective covers 20.2, so as to obtain an optimal flow of forced air, which reaches each combustion chamber 41 through the corresponding conduit 19 and the respective air feed opening 16.2. The flow of air passing through said opening 16.2 of each pit is in turn adjusted by the metal plate sliding gate 16. 3. In this regard, it must be noted that the dimension of said opening 16.2 is also chosen in relation to the calibrated through holes 38 in the bottom of the box for chars 37.1, so that the forced air fed into the inner space 37. 2a of the pedestal 37. 2 is divided into two flows:
- a main flow of forced air, which passes through said holes 38 and therefore the chars contained in the space 37.1a of the box 37.1 above, substantially obtaining a forge-like char combustion effect;
- another flow of forced air that outflows from said space 37.2a, passing between said pedestal 37.2 and the flat bottom of the pit 16, and then through the narrow space 37.3a existing between the box container for chars 37 and the related pit 16, substantially in the form of a laminar flow, which continuously removes heat from the outer walls of said container for chars 37, cooling it to the right operating temperature. Said two flows of forced air, thus heated, both ascend into said cooking chamber 42, mixing with any fresh air that can enter through the front slit 29, so that said chamber 42 is brought to and kept at the optimum temperature for cooking the food contained in the spit cooking utensil 30 which rotates uninterruptedly in the same chamber. The water contained in the trays 32 of each chamber 42 evaporates constantly, correctly humidifying the environment inside said cooking chamber 42. Moreover, this tray 32 continuously collects the liquids released by the food during cooking, preventing undesirable soiling of the surfaces of the same equipment.

The user of the equipment 10 observes the food during cooking through the window 28.4, accordingly adjusting - if necessary - the air delivery of the electric fans 20, by either total or partial opening or closing of the related covers 20.2, and the flow of air through the openings 16.2 by the plate metal gates 16. 3.

The rotation speed of the electric gear motor units 23 is instead constant and is set for optimum periodic exposure of each part of the food to be cooked relative to the flows of hot air ascending from the combustion chamber 41 and circulating in the chamber 42.

When the user deems that the barbecue food has been correctly cooked, he or she electrically disconnects both the electric fans 20 and the gear motor units 23 and, after having opened or removed the covers 28, extracts from each cooking chamber 42 the related cooking utensil 30 and, therefore, the food cooked therein.

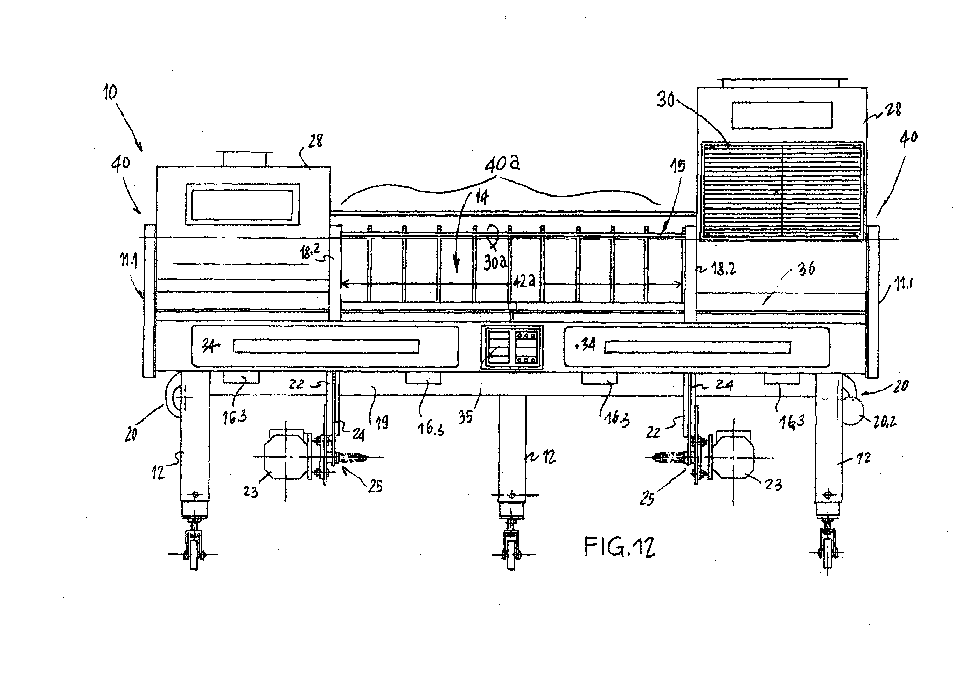

### Variant of embodiment (Fig. 12)

In this variant, the same reference numbers as above are used to indicate the same parts of the equipment 10.

As can be seen in Fig. 12, the median crosswise partition 18.1, the intermediate part 11.5 of the longitudinal vertical partition wall 11.4, and the two covers of the central front chambers 17 have been removed from said equipment 10. In this manner there is provided a double cooking stove 40a, open at the top, comprising two combustion chambers 41 and a double cooking chamber 42a and laterally delimited by the two crosswise partitions 18.2 having a box section, open at the front and, at the back, communicating with the char preparation chamber 14.

In the axial cavity of the two opposite shafts 21.2, supported in said partitions 18.2, there is housed, according to the axis Y-Y, a spit cooking utensil 30a of a length substantially corresponding to the width of the double cooking chamber 42a. This arrangement is convenient for cooking a large piece of food (not illustrated) on the barbecue.

For the remaining part, reference should be made to the foregoing description in relation to the equipment 10.

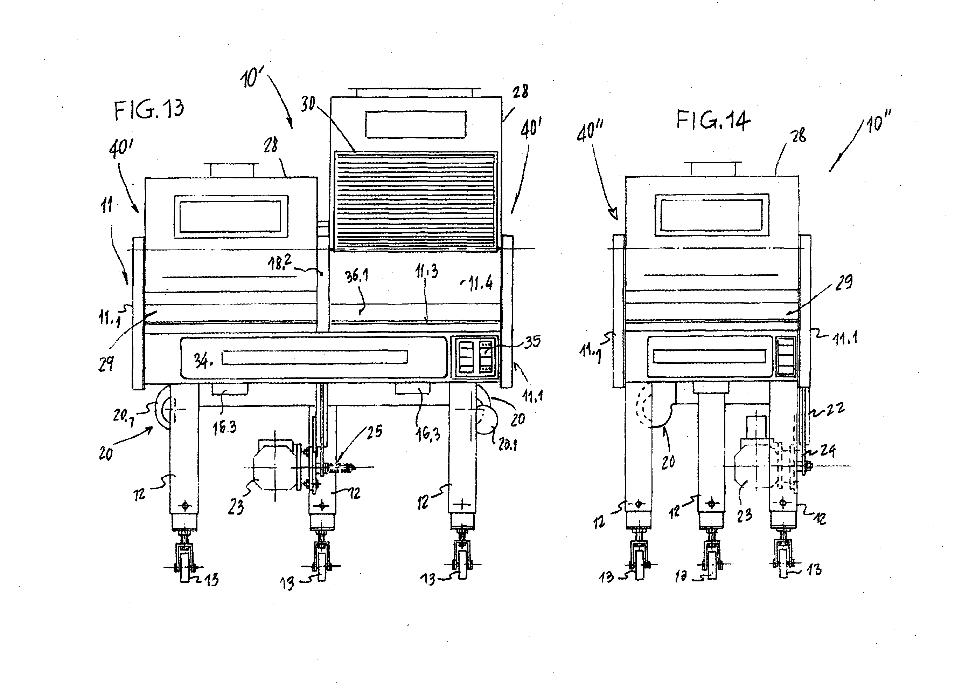

### Second embodiment (Fig. 13)

In this embodiment of the equipment according to the invention, similar parts to those of the equipment 10 described above are indicated with the same reference numbers.

The equipment according to this embodiment is indicated with 10' and comprises two adjacent stoves 40' each delimited, on the flat surface 11.3 of the bench 11, by a respective side wall 11.1, an intermediate crosswise partition 18.2 having a box section, a respective area of the longitudinal partition wall 11.4 and a corresponding cover 28.

Each stove 40' comprises, just as the stoves 40 of the equipment 10, a combustion chamber 41 and a cooking chamber 42, while said two stoves 40' each correspond to a respective area of the char preparation chamber 14.

For the remaining part, reference should be made to the foregoing description in relation to the equipment 10.

### Third embodiment (Fig. 14)

Also in this embodiment of the equipment according to the invention, similar parts to those of the equipment 10 described above are indicated with the same reference numbers. The equipment according to this embodiment is indicated with 10" and comprises a single stove 40" delimitated, on the flat surface of the bench 11, by the two side walls 11. 1, the longitudinal partition wall 11.4 (not visible in Fig. 14) and a cover 28.

The stove 40" comprises, just as the stoves 40 of the equipment 10, a combustion chamber 41 and a cooking chamber 42, and corresponds to the char preparation chamber 14.

It must be noted that, to save space, the gear motor 23 is provided with electronic torque limiting means.

For the remaining part, reference should be made to the foregoing description in relation to the equipment 10.

As will be clear from the foregoing, the cooking equipment according to the invention allows the objects set forth in the introduction of the present description to be achieved in a simple and effective manner.

## Claims

1. Equipment for cooking barbecue food (10, 10', 10"), comprising at least one stove (40, 40a, 40', 40") provided in a bench (11) with flat surface (11.3), said at least one stove (40, 40a, 40', 40") comprising:
- at least one combustion chamber (41) comprising:
. a pit (16), provided in said flat surface (11.3) and having a bottom provided with an opening (16.2) for the feed of forced air through a forced air conduit (19) by electric fan means (20), and
. a container for chars (37), comprising a box for chars (37.1) resting on the bottom of said pit (16) by a hollow pedestal (37.2), which surrounds said opening for the feed of forced air (16.2); whereas between said pit (16) and said container for chars (37) a narrow space (37.3a) is provided and the inner space (37.1a) of said box for chars (37.1) is placed in air communication with the inner space (37.2a) of said hollow pedestal (37.2) by through holes (38) provided on the bottom of the same box, and
- at least one cooking chamber (42, 42a) substantially above said at least one combustion chamber (41), **characterized in that** the at least one cooking chamber (42, 42a) comprises:
. at least two opposite vertical walls/partitions (11.1, 11. 4, 18.1, 18.2), extending upwards relative to said flat surface (11.3) and which delimit at least partly the same cooking chamber around at least one respective pit (16),
. a tray (32) in front of said at least one pit (16), for containing water and collecting liquids released by the food during cooking,
. means (21.2, 26) for supporting in a demountable manner a cooking utensil (30, 30a) in the form of a spit, grill or the like, arranged according to a longitudinal horizontal axis (Y-Y), in proximity of the top part of said at least one cooking chamber (42, 42a),
. means (21.1, 21.2, 21.3, 21.4, 22, 23, 23.1, 24, 25) for driving in rotation said cooking utensil (30, 30a), and
**in that** in each combustion chamber (41) the forced air fed into said inner space (37.2a) of the pedestal (37.2) through said opening (16.2) is divided into two flows:
- a first flow of forced air, which passes through said through holes (38) in the bottom of the box for chars (37.1) and the chars contained in the same box, substantially producing a forge-like char combustion effect, and
- another flow of forced air that outflows from said inner space (37.2a), passing underneath said pedestal (37.2) up into said pit (16), and through said narrow space (37.3a), existing between the container for chars (37) and the same pit (16), substantially forms a laminar flow, which continuously removes heat from the outer walls of said container for chars (37), and **in that** said two flows of forced air both ascend into said cooking chamber (42), which is brought to and kept at the optimum temperature for cooking the food contained in said cooking utensil (30, 30a), which rotates uninterruptedly.

2. Cooking equipment according to claim 1, **characterized in that** said opening (16.2) is selectively closed, either partially or totally, by a gate (16.3), slidingly arranged between the bottom of said pit (16) and said forced air conduit (19).

3. Cooking equipment according to claims 1 and/or 2, **characterized in that** at least one of the ends of said air conduit (19) is connected to an electric fan (20), enclosed in an open box (20.1), mounted in a sealed manner relative to said conduit (19), while a cover (20.2) is connected in an oscillating manner relative to said open box (20.1), so as to allow both closing and opening, total or partial, of the same box, to correspondingly adjust the air flow entering said conduit (19).

4. Cooking equipment according to claim 1, **characterized in that** said at least one cooking chamber (42) comprises a respective cover (28) removable and/or oscillating relative to an axis parallel to said axis (Y-Y), which is arranged resting relative to said vertical walls/partitions (11.1, 11.4, 18.1, 18.2) and comprises a part essentially shaped as a barrel vault (28.1) coaxial relative to said axis (Y-Y) and two substantially semi-circular disc-shaped sides (28.2), which close the top part of said at least one cooking chamber (42) - so-called working position of the same cover - allowing free rotation of said cooking utensil (30) carrying the food to be cooked on the barbecue, and **in that** said cover (28) comprises an integral tab (28.3), which extends the front end of said barrel vault (28.1) of said cover and in said working position of the same cover extends towards the flat surface (11.3), with distance relative thereto, so as to form a ventilation slit (29) between cover and flat surface.

5. Cooking equipment according to one or more of the previous claims, **characterized in that** said combustion chamber (41) and said at least one cooking chamber (42, 42a) are arranged in a front part of said flat surface (11.3) and **in that** said equipment (10, 10', 10") comprises a char preparation chamber (14), open at the top, formed in the back part of the same flat surface (11.3), communicating with said at least one cooking chamber (42, 42a) through at least one opening (36) provided in a longitudinal partition wall (11.4), extending for the entire width of said at least one same cooking chamber (42, 42a) and which is selectively closed by a corresponding port (36.1, 11.5).

6. Cooking equipment according to claim 6, **characterized in that** said char preparation chamber (14) includes a removable rack (15) shaped as a crib (15.4) resting on said flat surface (11.3) for loading wood that is burnt, so as to form char which accumulates on the same flat surface.

7. Cooking equipment according to claim 1, **characterized in that** said means for driving in rotation said cooking utensil (30, 30a) comprise, in the proximity of the top of at least one crosswise wall / partition (18.2), a top pinion (21.1), integral relative to a hollow shaft (21.2) with axis parallel to said axis (Y-Y) and supported rotating relative to the same wall / partition, **in that** a vertical support bar (22) is fixed underneath said top pinion (21.1) and relative to said wall / partition (18.2), extending downwards to below the flat surface (11.3) and, at the bottom end thereof, supports a respective electric gear motor unit (23), the output shaft of which is arranged with axis parallel to that of said hollow shaft (21.2) and carries a corresponding bottom pinion (23.1), while a corresponding Galle chain (24) is meshed between said pinions (21.1, 23. 1) and said bottom pinion (23.1) is connected relative to the output shaft of the gear motor unit (23) with the intermediary of a torque limiting friction clutch (25).

8. Cooking equipment according to claims 1 and 7, **characterized in that** said demountable support means of said cooking utensil (30, 30a) comprise said hollow shaft (21.2) of said rotation driving means, the cavity of which is accessible through said wall / partition (18.2) which supports the same shaft, while the opposite crosswise wall/partition (11.1, 18.1) has a respective essentially "V" shaped fixed support (26), the vertex of which is substantially aligned relative to the axis of said shaft (21.2).

9. Cooking equipment according to claim 1, **characterized in that** 10 said bench (11) is laterally delimited, along the two crosswise sides and the longitudinal back side, by respective fixed vertical side, crosswise (11.1) and longitudinal back (11.2) walls, which rise relative to said flat surface (11.3), **in that** on said flat surface (11.3) there is arranged a longitudinal vertical partition wall (11.4), which delimits, with said side walls, a back chamber (14), open at the top and extending for the entire length of the same flat surface, for preparing char, and **in that** the part of the flat surface (11.3), in front of said longitudinal partition wall (11.4), comprises at least one front chamber open at the top (17) corresponding to a respective stove (40, 40a, 40', 40").

10. Cooking equipment according to claim 9, **characterized in that** it comprises at least two front chambers open at the top (17) adjacent and separated by a median crosswise partition (18.1), **in that** said median crosswise partition (18.1) is removable and said longitudinal partition wall (11.4) comprises a removable intermediate part (11.5) and **in that**, when said median crosswise partition (18.1) and said intermediate part (11.5) of said partition wall (11.4) are removed, said equipment comprises a double cooking stove (40a) open at the top, which comprises two combustion chambers (41) and a double cooking chamber (42a), is laterally delimited by the two crosswise walls / partitions (18.2), is open at the front and, at the back, communicates with said char preparation chamber (14).

## Patentansprüche

1. Ein Kochgerät für gegrillte Speisen (10, 10', 10"), umfassend mindestens einen Grillofen (40, 40a, 40', 40"), vorgesehen in einem Arbeitstisch (11) mit Platte (11.3), wobei der mindestens eine Grillofen (40, 40a, 40', 40") Folgendes umfasst:
- mindestens eine Brennkammer (41) mit:
. einer Vertiefung (16), vorgesehen in der besagten Platte (11.3) und mit einem Boden, in dem eine Öffnung (16.2) vorgesehen ist zum Einlass von forcierter Luft durch eine Leitung (19) forcierter Luft mittels Elektroventilator (20) und
. einem Glutbehälter (37), umfassend ein Glutgehäuse (37.1), das auf den Boden der besagten Vertiefung (16) mittels eines Hohlsockels (37.2) gestellt wird, der die besagte Öffnung zum Einlass der forcierten Luft (16.2) einschließt; während zwischen der besagten Vertiefung (16) und dem besagten Glutbehälter (37) ein enger Raum (37.3a) vorgesehen ist und der Innenraum (37.1a) des besagten Glutgehäuses (37.1) in Luftverbindung mit dem Innenraum (37.2a) des besagten Hohlsockels (37.2) durch durchgehende Löcher (38) steht, die im Boden des Gehäuses selbst vorgesehen sind, und
- mindestens eine Kochkammer (42, 42a), die im Wesentlichen oberhalb der mindestens einen Brennkammer (41) liegt, **dadurch gekennzeichnet, dass** mindestens eine Kochkammer (42, 42a) Folgendes umfasst:
. mindestens zwei sich gegenüberliegende vertikale Wände / Trennwände (11.1, 11.4, 18.1, 18.2), die sich in Bezug auf die besagte Platte (11.3) nach oben erstrecken und zumindest teilweise die Kochkammer selbst im Inneren einer diesbezüglichen mindestens einen Vertiefung (16) begrenzen,
. ein Blech (32) vor der mindestens einen Vertiefung (16), um Wasser aufzunehmen und die von den Speisen während des Kochens abgegebenen Flüssigkeiten zu sammeln,
. Mittel (21.2, 26) zum Stützen, in zerlegbarer Form, eines Kochinstrumentes (30, 30a), etwa ein Spieß, Grill oder Ähnliches, angeordnet nach einer senkrechten waagrechten Achse (Y-Y), in der Nähe des oberen Teils der mindestens einen Kochkammer (42, 42a),
. Mittel (21.1, 21.2, 21.3, 21.4, 22, 23, 23.1, 24, 25) zum Ziehen durch Rotation des besagten Kochinstrumentes (30, 30a), und dass in jeder Brennkammer (41) die forcierte Luft, die in den besagten Innenraum (37.2a) des Hohlsockels (37.2) durch die besagte Öffnung (16.2) eingelassen wird, in zwei Strömungen unterteilt ist:
- eine erste forcierte Luftströmung, die die besagten durchgehenden Löcher (38) im Boden des Glutgehäuses (37.1) und die im Gehäuse selbst enthaltene Glut durchquert und im Wesentlichen einen Verbrennungseffekt wie in einer Schmiede bewirkt, und
- eine weitere forcierte Luftströmung, die aus dem besagten Innenraum (37.2a) herausströmt, indem sie unter dem besagten Hohlsockel (37.2) bis zur besagten Vertiefung (16) und durch den besagten engen Raum (37.3a) zieht, der sich zwischen dem Glutbehälter (37) und der Vertiefung (16) selbst befindet, im Wesentlichen eine Laminarströmung bildet, die ständig Wärme von den Außenwänden des besagten Glutbehälters (37) wegbringt, und dass die besagten zwei forcierten Luftströmungen beide in der besagten Kochkammer (42) aufsteigen, die auf die optimale Temperatur zum Kochen der Speisen, die im besagten sich ständig drehenden Kochinstrument (30, 30a) enthalten sind, gebracht und auf ihr gehalten werden.

2. Ein Kochgerät gemäß Anspruch 1, **dadurch gekennzeichnet, dass** die besagte Öffnung (16.2) wahlweise, ganz oder teilweise, mittels eines Verschlusses (16.3), der zwischen dem Boden der besagten Vertiefung (16) und der Leitung forcierter Luft (19) angeordnet ist, gleitend geschlossen werden kann.

3. Ein Kochgerät gemäß den Ansprüchen 1 und/oder 2, **dadurch gekennzeichnet, dass** an mindestens einem der Enden der besagten Luftleitung (19) ein Elektroventilator (20) verbunden ist, eingeschlossen in einem offenen Gehäuse (20.1), das bezüglich der besagten Leitung (19) abgedichtet montiert ist, während eine Abdeckung (20.2) bezüglich des besagten Gehäuses (20.1) oszillierend montiert ist, so dass sowohl das Schließen als auch das Öffnen, ganz oder teilweise, des Gehäuses selbst möglich ist, um die Luftströmung am Eingang in die besagte Leitung (19) entsprechend zu regulieren.

4. Ein Kochgerät gemäß Anspruch 1, **dadurch gekennzeichnet, dass** die besagte mindestens eine Kochkammer (42) eine entsprechende Abdeckung (28) umfasst, die abnehmbar und/oder oszillierend in Bezug auf eine Achse, die parallel zu der besagten Achse (Y-Y) verläuft, die anlehnend angeordnet ist in Bezug auf die besagten vertikalen Wände / Trennwände (11.1, 11.4, 18.1, 18.2), und einen Teil, der im Wesentlichen wie ein koaxiales Tonnengewölbe (28.1) in Bezug auf die besagte Achse (Y-Y) gestaltet ist, und zwei im Wesentlichen halbkreisförmige Seiten (28.2) umfasst, die den oberen Teil der besagten mindestens einen Kochkammer (42) abschließen - die sogenannte Arbeitslage der Abdeckung selbst -, und die freie Rotation des besagten Kochinstrumentes (30), das die zu kochenden Speisen zur Glut befördert, erlauben, und dass die besagte Abdeckung (28) einen kompletten Flügel (28.3) umfasst, der das vordere Ende des besagten Tonnengewölbes (28.1) der besagten Abdeckung verlängert und sich in der besagten Arbeitslage der Abdeckung selbst der Platte (11.3) mit Abstand in Bezug auf dieselbe entgegenstreckt, so dass zwischen der Abdeckung und der Platte ein Schlitz (29) zur Belüftung gebildet wird.

5. Ein Kochgerät gemäß einem oder mehreren der vorhergehenden Ansprüche, **dadurch gekennzeichnet, dass** die besagte Brennkammer (41) und die besagte mindestens eine Kochkammer (42, 42a) in einem vorderen Teil der besagten Platte (11.3) angeordnet sind, und dass das besagte Gerät (10, 10', 10") eine oben offene Kammer zur Vorbereitung der Glut (14) umfasst, die im hinteren Teil der Platte (11.3) selbst gestaltet ist und mit der besagten mindestens einen Kochkammer (42, 42a) durch mindestens eine Öffnung (36) in Verbindung steht, die in einer Längstrennwand (11.4) vorgesehen ist, die sich längs der ganzen Breite der besagten mindestens einen Kochkammer (42, 42a) selbst erstreckt, und die wahlweise mittels einer entsprechenden Klappe (36.1, 11.5) geschlossen werden kann.

6. Ein Kochgerät gemäß Anspruch 6, **dadurch gekennzeichnet, dass** die besagte Kammer zur Vorbereitung der Glut (14) ein entfernbares Gestell (15) ähnlich einer Futterkrippe (15.4) einschließt, die auf der besagten Platte (11.3) zum Aufladen des Holzes ruht, das verbrannt wird, damit Glut gebildet wird, die sich auf der Platte selbst anhäuft.

7. Ein Kochgerät gemäß Anspruch 1, **dadurch gekennzeichnet, dass** die besagten Mittel zum Ziehen durch Rotation des besagten Kochinstrumentes (30, 30a) in der Nähe des höchsten Punktes von mindestens einer queren Wand / Trennwand (18.2) ein oberes Triebrad (21.1) umfassen, das fest verbunden ist bezüglich einer Hohlwelle (21.2) mit einer zur besagten Achse (Y-Y) parallel verlaufenden Achse und das bezüglich der Wand / Trennwand selbst rotierend gestützt wird, durch dass eine vertikale Stützstange (22) unter dem besagten oberen Triebrad (21.1) befestigt ist und sich in Bezug auf die besagte Wand / Trennwand (18.2) nach unten vorstreckt bis unter die Platte (11.3) und an ihrem unteren Ende eine entsprechende elektrische Getriebemotorengruppe (23) trägt, deren Ausgangswelle mit einer parallel zu der besagten Hohlwelle (21.2) verlaufenden Achse angeordnet ist und ein entsprechendes unteres Triebrad (23.1) aufweist, während zwischen den besagten Triebrädern (21.1, 23.1) eine entsprechende Galle-Kette (24) eingreift und das besagte untere Triebrad (23.1) in Bezug auf die Ausgangswelle (23) der Getriebemotorengruppe mithilfe einer Drehmomentbegrenzer-Kupplung (25) verbunden ist.

8. Ein Kochgerät gemäß Anspruch 1 und 7, **dadurch gekennzeichnet, dass** die besagten Mittel zum Stützen, in zerlegbarer Form, des besagten Kochinstrumentes (30, 30a) die besagte Hohlwelle (21.2) der besagten Mittel zum Ziehen durch Rotation umfassen, deren Hohlraum durch die besagte Wand / Trennwand (18.2), die die Welle selbst stützt, zugänglich ist, während die gegenüberliegende quere Wand / Trennwand (11.1, 18.1) eine entsprechende im Wesentlichen "V"-förmige feste Stütze (26) aufweist, deren höchster Punkt in Bezug auf die Achse der besagte Welle (21.2) im Wesentlichen gefluchtet ist.

9. Ein Kochgerät gemäß Anspruch 1, **dadurch gekennzeichnet, dass** der besagte Arbeitstisch (11) seitlich, längs der beiden Querseiten und der hinteren Längsseite, von entsprechenden festen vertikalen Seitenwänden, Querwänden (11.1) und einer hinteren Längswand (11.2) begrenzt wird, die sich bezüglich der besagten Platte (11.3) erheben, dass auf der besagten Platte (11.3) eine vertikale Längstrennwand (11.4) angeordnet ist, die mit den besagten Seitenwänden eine oben offene hintere Kammer (14) begrenzt und sich längs der ganzen Länge der Platte selbst erstreckt, zur Glutzubereitung, und dass der Teil der Platte (11.3), der vor der besagten Längstrennwand (11.4) liegt, mindestens eine oben offene vordere Kammer (17) umfasst, die einem diesbezüglichen Grillofen (40, 40a, 40', 40") entspricht.

10. Ein Kochgerät gemäß Anspruch 9, **dadurch gekennzeichnet, dass** es mindestens zwei oben offene vordere Kammern (17) umfasst, die aneinander angrenzen und durch eine in der Mitte gelegene Quertrennwand (18.1) getrennt werden, dass die in der Mitte gelegene Quertrennwand (18.1) entfernbar ist und die besagte Längstrennwand (11.4) einen entfernbaren Zwischenteil (11.5) umfasst, und dass, wenn die besagte in der Mitte gelegene Quertrennwand (18.1) und der besagte Zwischenteil (11.5) der besagten Trennwand (11.4) entfernt werden, das besagte Gerät einen oben offenen doppelten Grillofen (40a) umfasst, der zwei Brennkammern (41) und eine doppelte Kochkammer (42a) umfasst, seitlich von den beiden queren Wänden / Trennwänden (18.2) begrenzt wird, vorne offen ist und hinten mit der besagten Kammer (14) zur Glutzubereitung in Verbindung steht.

## Revendications

1. Appareil de cuisson d'aliments à la braise (10, 10', 10"), comprenant au moins un fourneau (40, 40a, 40', 40") pourvu dans un banc (11) avec un plateau (11.3), ledit au moins un fourneau (40, 40a, 40', 40") comprenant :
- au moins une chambre de combustion (41) incluant :
. un puisard (16), pourvu dans ledit plateau (11.3) et présentant un fond, où est pourvue une ouverture (16.2) d'introduction d'air forcé à travers un conduit (19) d'air forcé par l'intermédiaire de moyens à ventilateur électrique (20), et
. un récipient pour braises (37), comprenant une boîte pour braises (37.1) appuyé sur le fond dudit puisard (16) au moyen d'un piédestal creux (37.2), qui entoure ladite ouverture d'introduction d'air forcé (16.2); tandis qu'entre ledit puisard (16) et ledit récipient pour braises (37) est pourvu un compartiment étroit (37.3a) et le compartiment interne (37.1a) de ladite boîte pour braises (37.1) est placé en communication d'air avec le compartiment intérieur (37.2a) dudit piédestal creux (37.2) par l'intermédiaire des trous passants (38) pourvus dans le fond de la boîte même, et
- au moins une chambre de cuisson (42, 42a) substantiellement au-dessus de ladite au moins une chambre de combustion (41), **caractérisé par le fait qu'**au moins une chambre de cuisson (42, 42a) comprend :
. au moins deux parois/cloisons verticales opposées (11.1, 11.4, 18.1, 18.2), étendues vers le haut par rapport audit plateau (11.3) et qui délimitent au moins en partie la chambre de cuisson sur le pourtour d'au moins un respectif puisard (16),
. une plat (32) devant ledit au moins un puisard (16), pour contenir de l'eau et collecter liquides libérés par les aliments durant la cuisson,
. des moyens (21.2, 26) de support de manière démontable d'un ustensile de cuisson (30, 30a) en guise de broche, grille ou similaires, disposés selon un axe horizontal longitudinal (Y-Y), à proximité de la partie supérieure de ladite au moins une chambre de cuisson (42, 42a),
. des moyens (21.1, 21.2, 21.3, 21.4, 22, 23, 23.1, 24, 25) d'entraînement en rotation dudit ustensile de cuisson (30, 30a), et
**par le fait que** dans chacune chambre de combustion (41) l'air forcé introduit dans ledit compartiment interne (37.2a) du piédestal (37.2) à travers la dite ouverture (16.2) est divisé en deux flux :
- un premier flux d'air forcé, qui traverse lesdits trous passants (38) dans le fond de la boîte pour braises (37.1) et les braises contenues dans la boîte même, en réalisant substantiellement un effet de combustion des braises en guise de forge, et
- un autre flux d'air forcé, qui s'écoule dudit compartiment interne (37.2a), passant au-dessous dudit piédestal (37.2) jusqu'au dit puisard (16), et à travers ledit compartiment étroit (37.3a), existant entre le récipient pour braises (37) et le puisard (16) même, forme substantiellement un flux laminaire, qui soustrait continuellement la chaleur aux parois extérieure dudit récipient pour braises (37),
et **par le fait que** lesdits deux flux d'air forcé, s'élèvent tous deux dans ladite chambre de cuisson (42), qui est portée et maintenue à la température optimale pour la cuisson des aliments, contenus dans ledit ustensile de cuisson (30, 30a) qui tourne constamment.

2. Appareil de cuisson selon la revendication 1, **caractérisé par le fait que** ladite ouverture (16.2) est sélectivement interceptée, partiellement ou totalement, par un obturateur (16.3), placé de manière coulissante entre le fond dudit puisard (16) et ledit conduit d'air forcé (19).

3. Appareil de cuisson selon les revendications 1 et/ou 2, **caractérisé par le fait qu'**au moins une des extrémités dudit conduit d'air (19) est raccordée à un ventilateur électrique (20), logé dans un boîtier ouvert (20.1), monté de manière étanche par rapport audit conduit (19), tandis qu'un couvercle (20.2) est raccordé de manière oscillante par rapport audit boîtier ouvert (20.1), afin de permettre la fermeture ainsi que l'ouverture, totale ou partielle, du boîtier en question, pour réguler de cette manière le flux d'air en entrée dudit conduit (19).

4. Appareil de cuisson selon la revendication 1, **caractérisé par le fait que** ladite au moins une chambre de cuisson (42) comprend un couvercle correspondant (28) amovible et/ou oscillant par rapport à un axe parallèle audit axe (Y-Y), lequel est disposé en appui par rapport auxdites parois/cloisons verticales (11.1, 11.4, 18.1, 18.2) et comprend une partie conformé essentiellement en voûte en berceau (28.1) coaxiale par rapport audit axe (Y-Y) et deux flancs substantiellement en disque semi-circulaire (28.2), qui ferment la partie supérieure de ladite au moins une chambre de cuisson (42) - appelée position de travail du couvercle même-, permettant la rotation libre dudit ustensile de cuisson (30) portant les aliments à cuire à la braise, et **par le fait que** ledit couvercle (28) comprend une ailette intégrale (28.3), laquelle prolonge l'extrémité avant de ladite voûte en berceau (28.1) dudit couvercle et, dans ladite position de travail du couvercle en question, s'étend vers le plateau (11.3), à distance par rapport au même, de façon à former entre le couvercle et la surface plate une fente (29) de ventilation.

5. Appareil de cuisson selon une ou plusieurs des revendications précédentes, **caractérisé par le fait que** ladite chambre de combustion (41) et ladite au moins une chambre de cuisson (42, 42a) sont placées dans une partie antérieure dudit plateau (11.3) et **par le fait que** ledit appareil (10, 10', 10") comprend une chambre de préparation des braises (14), à ciel ouvert, formée dans la partie postérieure du plateau (11.3) même, communiquant avec ladite au moins une chambre de cuisson (42, 42a) par l'intermédiaire d'au moins une ouverture (36) pourvue dans une paroi de séparation longitudinale (11.4), qui s'étend sur toute la largeur de ladite au moins une chambre de cuisson (42, 42a) même et qui est sélectivement fermée par un volet correspondant (36.1, 11.5).

6. Appareil de cuisson selon la revendication 6, **caractérisé par le fait que** ladite chambre de préparation des braises (14) inclut un râtelier amovible (15) à auge (15.4) appuyé sur ladite surface plate (11.3) pour le chargement du bois qui est brûlé, afin de former des braises en accumulation sur le plateau même.

7. Appareil de cuisson selon la revendication 1, **caractérisé par le fait que** lesdits moyens d'entraînement en rotation dudit ustensile de cuisson (30, 30a) comprennent, à proximité de la sommité d'au moins une paroi/cloison transversale (18.2), un pignon supérieur (21.1), solidaire par rapport à un arbre creux (21.2) à axe parallèle audit axe (Y-Y) et supporté en rotation par rapport à la paroi/cloison en question, **par le fait qu'**une tige verticale de support (22) est fixée au-dessous dudit pignon supérieur (21.1) et par rapport à ladite paroi/cloison (18.2), s'étend vers le bas jusqu'au-dessous du plateau (11.3) et, à son extrémité inférieure, soutient un groupe motoréducteur électrique (23) correspondant, dont l'arbre de sortie est disposé avec un axe parallèle à celui dudit arbre creux (21.2) et porte un pignon inférieur (23.1) correspondant, tandis qu'entre lesdits pignons (21.1, 23.1) est engrenée une chaîne Galle (24) correspondante et ledit pignon inférieur (23.1) est couplé par rapport à l'arbre de sortie du groupe motoréducteur (23) avec l'intermédiaire d'un embrayage limiteur de couple (25).

8. Appareil de cuisson selon les revendications 1 et 7, **caractérisé par le fait que** lesdits moyens de soutien de manière démontable dudit ustensile de cuisson (30, 30a) comprennent ledit arbre creux (21.2) desdits moyens d'entraînement en rotation, dont la cavité est accessible à travers ladite paroi/cloison (18.2) qui support l'arbre même, tandis que la paroi/cloison transversale opposée (11.1, 18.1) présente un support fixe correspondant essentiellement en « V » (26), dont le sommet est substantiellement aligné par rapport à l'axe dudit arbre (21.2).

9. Appareil de cuisson selon la revendication 1, **caractérisé par le fait que** ledit banc (11) est délimité latéralement, le long des deux côtés transversaux et du côté longitudinal postérieur, par des parois latérales correspondantes verticales fixes, transversales (11.1) et longitudinale postérieure (11.2), lesquelles s'élèvent par rapport à ladite surface plate (11.3), du fait que sur ledit plateau (11.3) est disposée une paroi de séparation verticale longitudinale (11.4), qui délimite, avec lesdites parois latérales, une chambre postérieure (14), à ciel ouvert et étendue sur toute la longueur dudit plateau même, pour la préparation des braises, et **par le fait que** la partie du plateau (11.3), devant ladite paroi de séparation longitudinale (11.4), comprend au moins une chambre antérieure à ciel ouvert (17) correspondant à un respectif fourneau (40, 40a, 40', 40").

10. Appareil de cuisson selon la revendication 9, **caractérisé par le fait qu'**il comprend au moins deux chambres antérieures à ciel ouvert (17) adjacentes et séparées par une paroi transversale médiane (18.1), **par le fait que** ladite paroi transversale médiane (18.1) est amovible et ladite paroi de séparation longitudinale (11.4) comprend une partie intermédiaire (11.5) amovible, et **par le fait que**, lorsque ladite paroi transversale médiane (18.1) et ladite partie intermédiaire (11.5) de ladite paroi de séparation (11.4) sont retirées, ledit appareil comprend un double fourneau de cuisson (40a) à ciel ouvert, lequel comprend deux chambres de combustion (41) et une double chambre de cuisson (42a), est délimitée latéralement par les deux parois/cloisons transversales (18.2), est ouverte antérieurement et, postérieurement, communique avec ladite chambre (14) de préparation des braises.
